# EUROPÄISCHE PATENTANMELDUNG

(11) **EP 3 054 179 A1**
(43) Veröffentlichungstag der Anmeldung: **10.08.2016**
(21) Anmeldenummer: 16154669.2
(22) Anmeldetag: 08.02.2016
(51) Int. Cl.: F16C 3/02, B29C 70/52, B29C 70/86, B29D 99/00, B29C 70/22

(54) **WELLE EINES GASTURBINENTRIEBWERKS IN FASERVERBUNDBAUWEISE**

(30) Priorität: 09.02.2015 DE 102015202260
(71) Anmelder: Rolls-Royce Deutschland Ltd & Co KG, 15827 Blankenfelde-Mahlow (DE)
(72) Erfinder: BUSCH, Christoph, 12555 Berlin (DE)
(74) Vertreter: Hoefer & Partner Patentanwälte mbB

(57) **Zusammenfassung**

Eine Welle 36 eines Turbinentriebwerks, gefertigt aus Faserverbundwerkstoff, mit einem sinusoiden Innenprofiil 27, welches sich über die gesamte Länge der Welle 14 an deren Innenwandung erstreckt, wobei die Welle 14 über ihre Länge einen gleichbleibenden Querschnitt aufweist, wobei eine erste, innenliegende Schicht 28 das sinusoide Innenprofil 27 bildet und aus ±45° zur Axialrichtung der Welle angeordneten Fasern besteht, wobei die konkaven äußeren Bereiche 29 der ersten Schicht 28 mittels einer zweiten Schicht 30 zur Bildung einer zylindrischen Außenkontur mit zur Mittelachse 31 parallelen Fasern gefüllt sind, wobei sich die zweite Schicht 30 in Umfangsrichtung jeweils nur in dem konkaven Bereich 29 erstreckt, wobei auf der zweiten Schicht 30 eine dritte Schicht 32 mit ±30° zur Axialrichtung der Mittelachse 31 angeordneten Fasern ausgebildet ist und wobei auf der dritten Schicht 32 eine vierte Schicht 33 mit ±88° zur Axialrichtung angeordneten Fasern ausgebildet ist, dadurch gekennzeichnet, dass zwischen der zweiten Schicht 30 und der dritten Schicht 32 eine sich um den gesamten Umfang der Welle erstreckende Zwischenschicht 34 aus zur Axialrichtung parallelen Fasern angeordnet ist.

## Beschreibung

Die vorliegende Erfindung betrifft eine Welle eines Gasturbinentriebwerks, insbesondere eine Radialwelle oder eine zur Maschinenachse in einem Winkel angeordnete Welle.

Radialwellen für Gasturbinentriebwerke werden meist in Metallbauweise ausgeführt. Sie dienen zum Starten des Triebwerks, indem ein Elektromotor oder eine Luftturbine, welche in einer externen Getriebebox verbaut sind, über ein Getriebe die Radialwelle antreibt. Diese ist über ein Getriebe mit dem Hochdruckkompressor der Gasturbine verbunden. Zum Starten wird somit der Hochdruckkompressor in Rotation versetzt, um den Verbrennungsvorgang starten zu können.

Im Betrieb des Triebwerks wird über dieselbe Verbindung in umgekehrter Richtung die Welle angetrieben, um über ein externes Getriebe Pumpen und Generatoren anzutreiben.

An derartige Wellen werden die folgenden Anforderungen gestellt. Zum Einen muss die Welle sehr schlank gebaut sein, da sie durch eine Strebe im Zwischengehäuse oder generell durch den zweiten Luftkreislauf bei einem Zweikreis/Zweistrom-Turbinen-Luftstrahltriebwerk geführt werden muss und somit immer einen strömungsmechanischen Widerstand darstellt, der einen direkten Einfluss auf die Triebwerksleistung und Effizienz hat. Hinsichtlich ihrer geometrischen Konfiguration muss die Welle durch Öffnungen in der Triebwerksaufhängung durchgeführt werden, um das externe Getriebe mit dem Hochdruckkompressor zu verbinden. Eine weitere Anforderung besteht darin, dass die Welle hohe Drehmomente bei hohen Drehzahlen in beiden Richtungen übertragen muss.

Radialwellen in Metallbauweise, so wie sie aus dem Stand der Technik bekannt sind, stoßen bei der Triebwerksentwicklung an das Limit ihrer Einsatzfähigkeit, da diese Wellen bereits an der Grenze der biegekritischen Drehzahl ausgelegt sind. Die verwendeten Materialien lassen somit keine Verlängerung oder Verschlankung der Wellengeometrie zu. Hierdurch wird die Entwicklung von Gasturbinentriebwerken mit einem kleineren Kerntriebwerk mit höheren Drehgeschwindigkeiten und einem größeren Fandurchmesser stark behindert. Bei einem größeren Fan und einem kleineren Durchmesser des Kerntriebwerks ergibt sich ein größerer Abstand zwischen dem Kerntriebwerk und einem externen Getriebe (Getriebebox), woraus zwangsläufig längere Radialwellen resultieren müssten. Diese würden in der aus dem Stand der Technik bekannten Metallbauweise dickwandiger, größer und, bedingt durch die Biegethematik, durch ein zentrisches Lager abgestützt ausgebildet werden müssen. Hierdurch ergeben sich ein höheres Gewicht des gesamten Triebwerks sowie eine schlechtere Aerodynamik.

Aus dem Stand der Technik sind Triebwerkswellen für Gasturbinentriebwerke vorbekannt, welche aus Faserlagen, welche in eine hochtemperaturbeständige Kunststoffmatrix eingebettet sind, aufgebaut sind.

Die DE 10 2011 085 962 B4 beschreibt eine innenprofilierte Welle aus Faserverbundstoff mit Lasteinleitungselementen, welche über ihre Länge einen gleichbleibenden Querschnitt aufweist und eine zylindrische Außenkontur besitzt. Eine derartige Welle weist z.B. unter den Einsatzbedingungen eines Flugzeugtriebwerks nicht die erforderliche Kombination aus Torsionssteifigkeit und Drehzahlsteifigkeit auf. Dabei besteht zudem insgesamt die Gefahr, dass sich die einzelnen Schichten delaminieren und dass sich insbesondere das Lasteinleitelement von der Faserverbundstruktur lösen kann. Ein Delaminieren tritt dadurch auf, dass zwischen den einzelnen Faserverbundschichten ein zu großer Faserwinkelt gewählt ist, wodurch sich ein ausgeprägter Steifigkeitssprung einstellt.

Der Erfindung liegt die Aufgabe zugrunde, eine Welle eines Fluggasturbinentriebwerks, insbesondere eine Radialwelle zu schaffen, welche bei einfachem Aufbau und einfacher, kostengünstiger Anwendbarkeit, unter Vermeidung der Nachteile des Standes der Technik allen Anforderungen gerecht wird.

Erfindungsgemäß wird die Aufgabe durch die Merkmalskombination des Anspruchs 1 gelöst, die Unteransprüche zeigen weitere vorteilhafte Ausgestaltungen der Erfindung.

Die Erfindung schafft somit eine neue Faserverbundantriebswellenbauweise, die es ermöglicht, eine derartige Faserverbundwelle in einem Strangprofil herzustellen und dabei die Drehzahlsteifigkeit und die Torsionssteifigkeit erheblich zu erhöhen. Erfindungsgemäß kann die Welle somit in Massenproduktion erzeugt werden, so dass sich die Fertigungskosten erheblich reduzieren. Aus dem endlos gefertigten Strangprofil können dann die einzelnen Wellen abgelängt werden. Weiterhin ist es im Hinblick auf die Drehzahlsteifigkeit und die Torsionssteifigkeit möglich, den minimalen Innendurchmesser der Welle zu erhöhen und zugleich den maximalen Außendurchmesser zu reduzieren. Es ergibt sich somit eine Welle mit einer im Vergleich zum Stand der Technik reduzierten Wanddicke. Hierdurch wird, zusätzlich zu der höheren Torsionssteifigkeit und der gesteigerten Drehzahlsteifigkeit, der benötigte Bauraum erheblich reduziert. Durch die Möglichkeit, die erfindungsgemäße Welle mit einem geringeren Außendurchmesser auszubilden, ergibt sich der Vorteil, dass der Durchmesser eines Gehäuses, in welchem die Welle im eingebauten Zustand aufgenommen ist, ebenfalls reduziert werden kann, wodurch sich eine deutliche Gewichtsersparnis ergibt. Dies wiederum verbessert die Durchströmung des Nebenstromkanals des Turbinentriebwerks sowie den Wirkungsgrad des Triebwerks.

Durch den erfindungsgemäß vorgesehenen Aufbau der Welle ist es, wie erwähnt, möglich, diese in beliebiger Länge von einem Endlosstrang abzulängen. Hierdurch wiederum ergibt sich die Möglichkeit, abhängig von dem jeweiligen Anwendungszweck, unterschiedlich lange Wellen gleichen Aufbaues zu erzeugen. Bei den aus dem Stand der Technik bekannten konischen Wellen ist es stets erforderlich, bei unterschiedlichen Längen eine komplette Neudimensionierung vorzunehmen, was hinsichtlich der Berechnung und der zur Zulassung erforderlichen Tests einen erheblichen Aufwand bedeutet.

Die Erfindung betrifft somit eine Welle eines Turbinentriebwerks, gefertigt aus Faserverbundwerkstoff, mit einem sinusoiden Innenprofil, welches sich über die gesamte Länge der Welle an deren Innenwandung erstreckt, wobei die Welle über ihre Länge einen gleichbleibenden Querschnitt aufweist, wobei eine erste, innenliegende Schicht das sinusoide Innenprofil bildet und aus ±45° zur Axialrichtung der Welle angeordneten Fasern besteht, wobei die konkaven äußeren Bereiche der ersten Schicht mittels einer zweiten Schicht zur Bildung einer zylindrischen Außenkontur mit zur Mittelachse parallelen Fasern gefüllt sind, wobei sich die zweite Schicht erfindungsgemäß in Umfangsrichtung jeweils sowohl in dem konkaven Bereich erstreckt als auch zusätzlich in einem Verbund über den konkaven Bereichen (auch Zwischenschicht genannt), wobei auf der zweiten Schicht eine dritte Schicht mit ±30° zur Axialrichtung der Mittelachse angeordneten Fasern ausgebildet ist und wobei auf der dritten Schicht eine vierte Schicht mit ±88° zur Axialrichtung angeordneten Fasern ausgebildet ist.

Erfindungsgemäß wird somit eine Radialwelle geschaffen, welche in Faserverbundbauweise aufgebaut und hergestellt ist. Dabei sind metallische Endstücke mit einem rohrförmigen Zwischenstück der Welle verbunden. Hierdurch sinkt die Gesamtmasse der Radialwelle. Durch die Verwendung von hochsteifen Fasern ergibt sich ein sehr hoher Anstieg der Steifigkeit. Aufgrund der sich ergebenden höheren biegekritischen Drehzahl ist es nicht erforderlich, die Welle durch ein zusätzliches zentrisches Lager abzustützen. Durch die hohen Steifigkeiten und hohen Festigkeiten der Faserstoffe ist es möglich, sehr lange Wellenkonstruktionen zu realisieren, welche den Abstand zwischen einem Kerntriebwerk und einer externen Getriebebox überbrücken können, wobei keine Erhöhung des Wellendurchmessers notwendig ist. Die erfindungsgemäße Welle zeichnet sich zudem dadurch aus, dass hohe Drehmomente übertragen werden können und dass sich eine erhebliche Erhöhung der Eigenfrequenz ergibt.

Die erfindungsgemäße Radialwelle kann somit sehr schnell drehend ausgeführt werden, so dass Drehzahlen bis 30.000 UpM realisiert werden können. Zudem ist die erfindungsgemäße Radialwelle in der Lage, hohe Drehmomente zu übertragen, beispielsweise bis zu 2.000 Nm. Die Durchmesser derartiger Radialwellen können sehr gering sein, beispielsweise bis maximal 150 mm, verbunden mit sehr geringen Wandstärken von ca. 3 mm, welche das Gesamtgewicht erheblich reduzieren.

Wie nachfolgend anhand des Ausführungsbeispiels beschrieben wird, führt die erfindungsgemäße zweite Schicht, welche Fasern in Axialrichtung aufweist, zu der optimierten Drehzahlsteifigkeit, während insbesondere die mit Fasern in einer ±45°-Anordnung versehene Schicht die Torsionssteifigkeit verbessert. All dies führt zu einer erhöhten Lebensdauer der erfindungsgemäßen Welle.

In erfindungsgemäß besonders vorteilhafter Weiterbildung ist vorgesehen, dass die zweite Schicht durch in Umfangsrichtung der Welle angeordnete Stabelemente gebildet ist, welche bevorzugterweise aus Fasern gebildet sind, welche durch ein Bindemittel vorfixiert sind, um die Stabelemente während des Fertigungsverfahrens einlegen zu können.

Besonders vorteilhaft ist es, wenn das sinusoide Innenprofil in Umfangsrichtung Wellenlängen λ mit Amplituden A aufweist und wenn die Amplitude A zur Wellenlänge λ in einem Verhältnis von 1:8 bis 1:30 ist. Bevorzugterweise beträgt das Verhältnis 1:24. Das sinusoide Innenprofil ist bevorzugterweise mit Flankenwinkeln α von 10° bis 30°, bevorzugt 15°, ausgebildet. Durch diese Ausgestaltung wird sichergestellt, dass zwischen den metallischen Lasteinleitungselementen und dem Faserverbund-Aufbau der Welle eine optimale Kraftübertragung erfolgt.

Die mit ±45° zur Axialrichtung angeordneten Fasern der ersten Schicht bestehen vorzugsweise aus flachen, gespreizten Kohlefaserbändern. Auch hierdurch wird die Herstellung wesentlich vereinfacht.

Bei der erfindungsgemäßen Welle sind alle Schichten der Welle mit Harz getränkt und nachfolgend ausgehärtet, so wie dies auch dem Stand der Technik bekannt ist. Dabei können insbesondere auch die mit dem Bindemittel vorfixierten Fasern der Stabelemente in sicherer Weise vollständig mit Harz getränkt und somit ausgehärtet werden, ohne dass Strukturunterschiede und somit Steifigkeitsunterschiede entstehen.

Die erfindungsgemäße Welle kann als Endlosstrang gefertigt und auf die erforderliche Länge des jeweiligen Einsatzzweckes abgelängt werden. Dies kann vor oder nach der Tränkung mit Harz und der zugehörigen Aushärtung erfolgen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine vereinfachte perspektivische Ansicht des Aufbaues einer aus dem Stand der Technik bekannten Faserverbundwelle,
- Fig. 3: eine vereinfachte Seitenansicht der erfindungsgemäßen Faserverbundwelle,
- Fig. 4: eine perspektivische vereinfachte Explosionsansicht des Aufbaues der erfindungsgemäßen Welle,
- Fig. 5: eine Schnittansicht in einer Radialwelle, analog Fig. 4,
- Fig. 6: eine vereinfachte perspektivische Ansicht einer erfindungsgemäßen Faserverbundwelle mit metallischem Lasteinleitungselement, und
- Fig. 7: eine schematische Darstellung der sinusoiden Wellen.

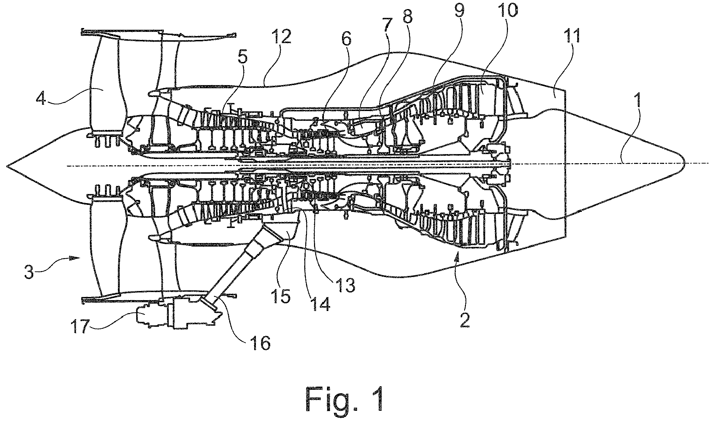

Das Gasturbinentriebwerk 2 gemäß Fig. 1 ist ein allgemein dargestelltes Beispiel, bei dem die Erfindung Anwendung finden kann. Das Triebwerk 2 ist in herkömmlicher Weise ausgebildet und umfasst in Strömungsrichtung hintereinander einen Lufteinlass 3, einen in einem Gehäuse umlaufenden Fan 4, einen Mitteldruckkompressor 5, einen Hochdruckkompressor 6, eine Brennkammer 7, eine Hochdruckturbine 8, eine Mitteldruckturbine 9 und eine Niederdruckturbine 10 sowie eine Abgasdüse 11, die sämtlich um eine zentrale Triebwerksachse angeordnet sind.

Die Fig. 1 zeigt ein Ausführungsbeispiel einer erfindungsgemäßen Radialwelle bzw. einer Triebwerkswelle der erfindungsgemäßen Art.

Die Welle ist entweder als Radialwelle 14 oder als gewinkelt angeordnete Welle 16 ausgebildet und dient dazu, ein Getriebe 13 mit einem Getriebe 15 zu verbinden. Das Getriebe 15 kann mit Nebenaggregaten betriebsverbunden sein. Die erfindungsgemäß ausgebildete Welle kann auch in Form einer geneigt angeordneten Welle 16 ausgebildet sein, welche mit einem Getriebe 17 zum Anschluss von Nebenaggregaten verbunden ist.

Die folgende Beschreibung bezieht sich auf eine Radialwelle 14, analog hierzu ist auch eine gewinkelt angeordnete Welle 16 aufgebaut.

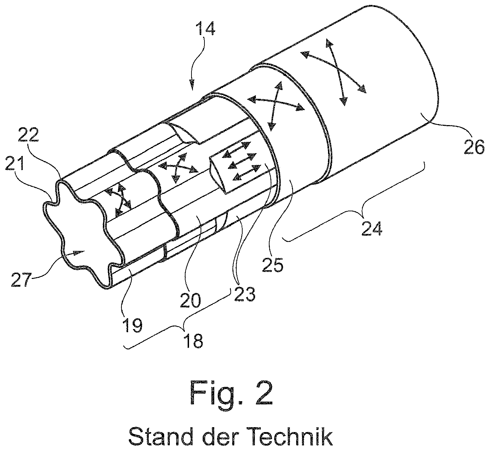

Fig. 2 zeigt den näheren Aufbau einer Profilwelle 14 gemäß dem Stand der Technik. Die Welle hat eine innere Profilschale 18, bestehend aus einer ersten, inneren Schicht 19 aus einer FKV-Lage mit einem Faserwinkel von 60°, bezogen auf die axiale Richtung der Profilwelle 14 und einer zweiten, äußeren Schicht 20, bestehend ebenfalls aus einer FKV-Lage mit einem Faserwinkel von 45°, bezogen auf die axiale Richtung der Profilwelle 14. Die Faserrichtungen der einzelnen Schichten sind durch Pfeile angedeutet. Die Profilschale 18 weist eine Profilierung auf, mit konkaven Bereichen 21 und konvexen Bereichen 22, wobei diese konkaven Bereiche nach innen auskragen und somit außenseitig eine Vertiefung bilden.

Nach außen an die Profilschale 18 schließen sich unidirektionale Streifen 23 an. Diese unidirektionalen Streifen 23 bestehen aus unidirektionalen Leisten aus FKV-Material mit einem Faserwinkel von 0°, bezogen auf die axiale Richtung der Profilwelle 14. Die unidirektionale Leisten sind in den durch die konkaven Bereiche 21 gebildeten Vertiefungen angeordnet, so dass die unidirektionalen Streifen 23 außenseitig annähernd eine Zylinderform bilden.

Außen an den unidirektionalen Streifen 23 schließt sich eine Zylinderschale 24 an. Die Zylinderschale 24 besteht aus einer ersten Schicht 25 aus FKV in einem Winkel von 45°, bezogen auf die axiale Richtung der Profilwelle 14. Die zweite Schicht 26 besteht ebenfalls aus FKV-Material mit einem Faserwinkel von 60°, bezogen auf die axiale Richtung der Profilwelle 14.

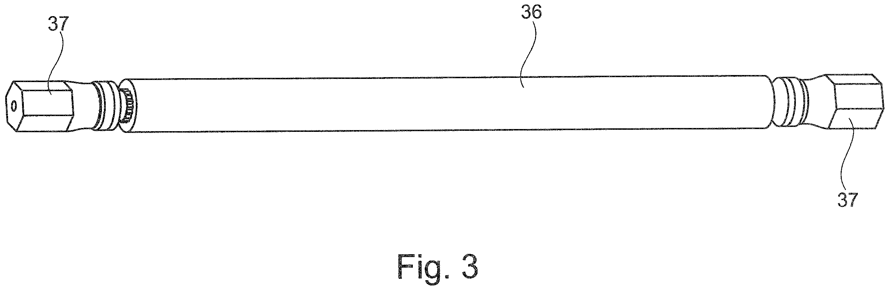

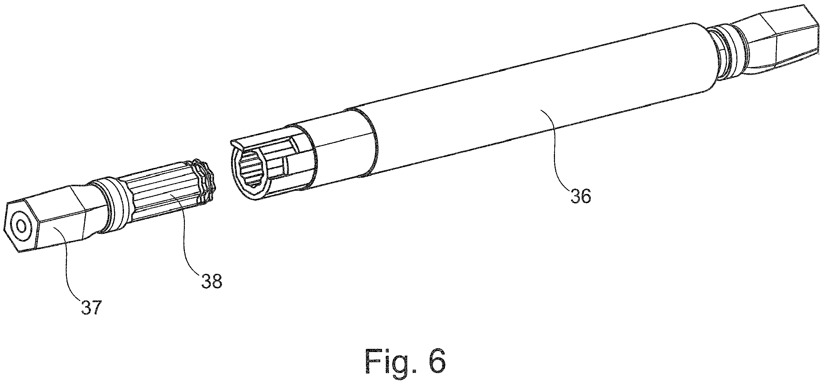

Die Fig. 3 zeigt eine Seitenansicht einer erfindungsgemäßen Welle. Dabei ist die Faserverbundwelle mit dem Bezugszeichen 36 bezeichnet. In die Endbereiche der Faserverbundwelle 36 sind jeweils vereinfacht dargestellte Lasteinleitungselemente 37 eingesteckt und dort fixiert, so wie dies aus dem Stand der Technik bekannt ist. Die Lasteinleitungselemente sind, wie insbesondere aus Fig. 6 ersichtlich ist, welche eine vergrößerte perspektivische Detailansicht zeigt, an ihrem freien Ende mit einer Verzahnung oder einer Mehrfachkontur oder ähnlichem versehen. Hierzu wird auf den Stand der Technik verwiesen. Die Lasteinleitungselemente 37 weisen jeweils einen mit einer Sinusoidkontur versehenen zylindrischen Anschlusszapfen auf, welcher zur Erzeugung einer Profilverbindung 38 mit der hierzu passenden Innenkontur der Faserverbundwelle 36 dient.

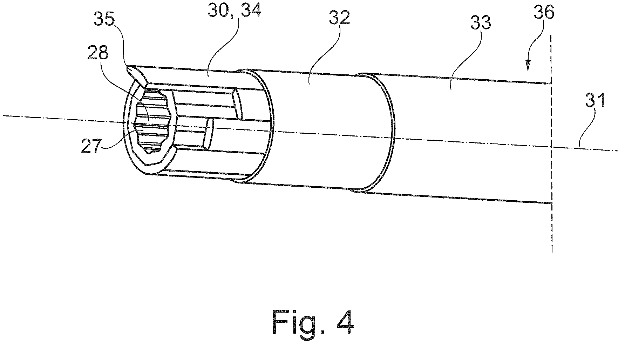

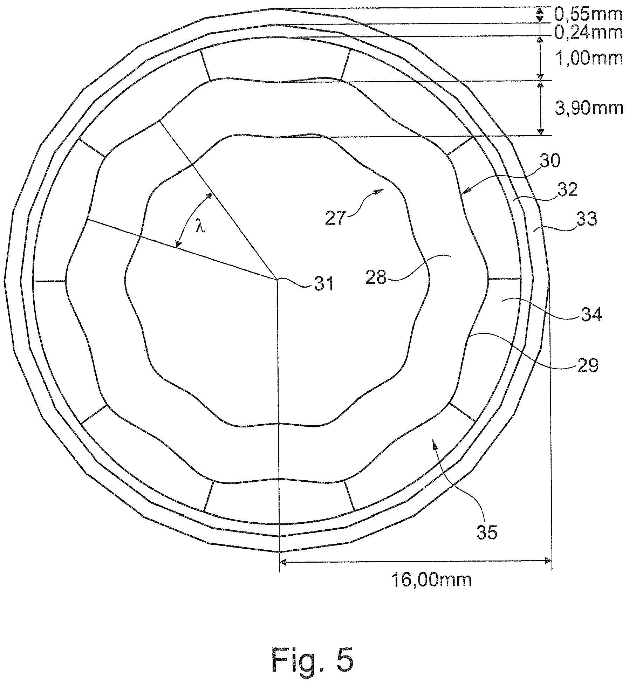

Die Fig. 4 und 5 zeigen jeweils in einer perspektivischen Explosionsansicht bzw. einer Radialschnittansicht den Aufbau der erfindungsgemäßen Welle.

Die Fig. 4 und 5 zeigen, dass die Welle ein sinusoides Innenprofil 27 aufweist. Durch die in ±45°-Lagen angeordneten Fasern wird eine erste, innenliegende Schicht 28 gebildet, welche eine sinusoide Außenkontur mit konkaven äußeren Bereichen 29 umfasst. In die konkaven äußeren Bereiche ist eine zweite Schicht 30 eingelegt. Diese wird aus achsparallelen Fasern gebildet und erstreckt sich in Umfangsrichtung jeweils nur in den konkaven äußeren Bereichen 29.

Radial nach außen fortschreitend ist eine erfindungsgemäße Zwischenschicht 34 vorgesehen, welche ebenfalls aus achsparallelen Fasern aufgebaut ist. Zum besseren Verständnis wurde diese Schicht in Fig. 5 separat zu der zweiten Schicht 30 dargestellt. Erfindungsgemäß sind die Stabelemente 35, welche die zweite Schicht 30 bilden, einstückig mit der Zwischenschicht 34 ausgebildet, so wie dies in Fig. 4 dargestellt ist. Dadurch ergibt sich ein wesentlicher Fertigungsvorteil, da es sich in einer Serienfertigung nicht realisieren lässt, eine aus einzig achsparallelen Fasern bestehende Schicht über den Umfang der Welle aufzubringen, so dass diese knickungsfrei und achsparallel in ihrer Ausrichtung verbleiben. Grundsätzlich ist es jedoch auch möglich, die beiden Schichten gemäß Fig. 5 unabhängig voneinander zu erzeugen, wobei es zum genannten Fertigungsproblem kommt und die Eigenschaften der Welle nachteilig beeinflusst, beziehungsweise zu hohem Ausschuss führt. Bei der Ausgestaltung gemäß Fig. 4 berühren sich die einzelnen Stabelemente 35 in Umfangsrichtung.

Auf der Zwischenschicht 34 ist erfindungsgemäß eine dritte Schicht 32 ausgebildet, welche aus Fasern in ±30°-Lagen gebildet wird. Außenliegend ist eine vierte Schicht 33 vorgesehen, welche aus Fasern mit ±88°-Lagen besteht.

Das Verhältnis zwischen Amplitude A und Wellenlänge λ wurde in Vergleichsuntersuchungen optimiert.

Iterative Berechnungen haben dabei gezeigt, dass die besten Ergebnisse bzgl. der mechanischen Belastbarkeit der aus ±45° Lagen bestehenden Sinusoidkontur auftritt, wenn die Amplitude und die Wellenlänge im Verhältnis 1:8 bis 1:30 liegen, besonders 1:24. Dies zeigte sich unabhängig davon, wieviele "Zähne" (Sinusoide) in der Kontur aufgebracht werden. Dieses Verhältnis von Amplitude zu Wellenlänge entspricht Flankenwinkeln α von 10° bis 30°, insbesondere von 15°.

Die Fig. 5 zeigt weiterhin beispielhaft Maßangaben zu den Dicken der Schichten bei einer Welle mit einem Außenradius von 16mm bzw. einem Außendurchmesser von 32mm.

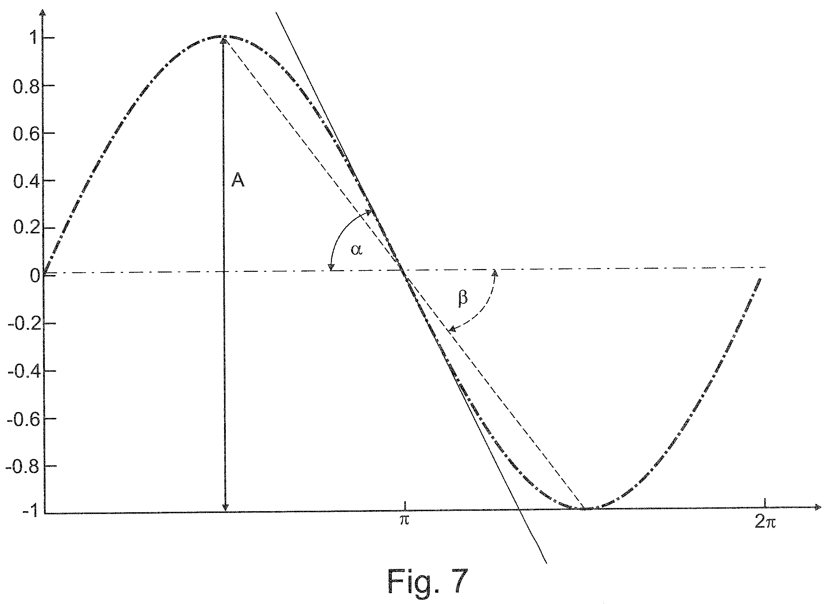

In Fig. 7 ist schematisch eine Welle der Sinusoide dargestellt, um den oben genannten Flankenwinkel α (Tangente am Wendepunkt) zu definieren. Zusätzlich ist der Winkel ß eingezeichnet, der den Tangens der Amplitude A wiedergibt, mit α > ß.

| Bsp.: | D=80 | D=32 | D=30 | D=35 | D=85 | D=32 Maximum |
|---|---|---|---|---|---|---|
| A (Amplitude) in mm | 0,5 | 0,27 | 0,25 | 0,7 | 0,7 | 2,1 |
| λ (Wellenlänge) in mm | 12 | 7,8 | 6 | 6,2 | 16,8 | 11,6 |
| K= A/λ | 24 | 24,9 | 24,4 | 8,8 | 24 | 5,6 |

Es zeigte sich beim Stand der Technik, dass es sich nachteilig auf die Torsions- und Eigenfrequenzeigenschaften der Welle auswirkt, wenn alle durch in Axialrichtung angeordnete Fasern gebildete Lagen in den konkaven Bereichen der Sinusoide (Zähne) eingebracht werden (so wie die Wellen zum Stand der Technik ausgeführt wurden). Bei Berechnungen zur Annäherung an das Maximum der durch in Axialrichtung angeordnete Fasern gebildeten Lagen in den Sinusoidtälern hat sich ein maximales Verhältnis von Amplitude zu Wellenlänge von 1:5 ergeben. Bei größeren Verhältnissen wird die Steigung der Sinusoide so groß, dass die Sinusoidflanken (Zahnflanken) eine zu große Fläche bilden und die mechanische Belastbarkeit stark abfällt. Zudem wird der Anstieg der darauffolgenden ±45° Lagen so groß, dass diese nicht mehr kontinuierlich gekrümmt wären sondern stattdessen knicken müssten, was sich Fertigungstechnisch nicht umsetzen lässt. Weiterhin führt dies zu einem inhomogenen Faserverlauf, der die mechanischen Eigenschaften der Welle verschlechtert. Um diesem entgegenzuwirken, wurde erfindungsgemäß die Zwischenlage aus ebenfalls in Axialrichtung angeordneten Fasern eingefügt. Je geringer das Verhältnis von Sinusoidamplitude zu Wellenlänge desto besser die mechanische Belastbarkeit (Torsion). Bei zu geringen Amplituden steigt jedoch die Gefahr des Durchrutschens des Lasteinleitungselements (Inserts) bei hohen Torsionslasten, da sich die Sinusoidkontur einem Kreis annähert. Hier zeigte sich das erfindungsgemäße Optimum von 1:24 für Amplitude zu Wellenlänge. Das Verhältnis von im konkaven Bereich der Sinusoide in Axialrichtung angeordneten Fasern und der erfindungsgemäßen Zwischenschicht mit einem Faservolumengehalt von 1:10 bis 4:10, bildet erfindungsgemäß das Optimum zur Ausnutzung des vorhanden Bauraumes und der mechanischen Belastbarkeit bei Faserverbundwellen. Es wird dabei jeweils auf den Durchmesser bzw. die radialen Abmessungen Bezug genommen.

Hinsichtlich der radialen Dickenverhältnisse der einzelnen Schichten hat sich erfindungsgemäß, für Wellen mit Drehzahlen im Bereich von 30.000 UpM und Drehmomenten von 2.000 Nm, folgendes als besonders vorteilhaft erwiesen: Bezogen auf die Gesamtdicke des Faserverbundaufbaues der Welle, bezogen auf die sinusoide Innenkontur, und dabei auf den tiefsten Scheitel der konkaven Bereiche, haben die ±45°-Lagen 70% der Gesamtdicke. Die ±30°-Lagen haben 2% der Gesamtdicke, während die ±88°-Lagen 10% der Gesamtdicke ausmachen. Die achsparallelen Lagen haben somit einen Anteil von 18%.

### Bezugszeichenliste:

- 1: Triebwerksachse
- 2: Gasturbinentriebwerk /Kerntriebwerk
- 3: Lufteinlass
- 4: Fan
- 5: Mitteldruckkompressor (Verdichter)
- 6: Hochdruckkompressor
- 7: Brennkammern
- 8: Hochdruckturbine
- 9: Mitteldruckturbine
- 10: Niederdruckturbine
- 11: Abgasdüse
- 12: Triebwerksgehäuse
- 13: Getriebe
- 14: Welle
- 15: Getriebe
- 16: Welle
- 17: Getriebe
- 18: innere Profilschale
- 19: erste, innere Schicht
- 20: zweite, äußere Schicht
- 21: konkaver Bereich
- 22: konvexer Bereich
- 23: unidirektionaler Streifen
- 24: Zylinderschale
- 25: erste Schicht
- 26: zweite Schicht
- 27: sinusoides Innenprofil
- 28: erste innenliegende Schicht
- 29: konkaver äußerer Bereich
- 30: zweite Schicht
- 31: Mittelachse
- 32: dritte Schicht
- 33: vierte Schicht
- 34: Zwischenschicht
- 35: Stabelement
- 36: Faserverbundwelle
- 37: Lasteinleitungselement
- 38: Profilverbindung

## Patentansprüche

1. Welle eines Turbinentriebwerks, gefertigt aus Faserverbundwerkstoff, mit einem sinusoiden Innenprofil (27), welches sich über die gesamte Länge der Welle (14) an deren Innenwandung erstreckt, wobei die Welle (14) über ihre Länge einen gleichbleibenden Querschnitt aufweist, wobei eine erste, innenliegende Schicht (28) das sinusoide Innenprofil (27) bildet und aus ±30° bis ±60°, insbesondere ±45° zur Axialrichtung der Welle angeordneten Fasern besteht, wobei die konkaven äußeren Bereiche (29) der ersten Schicht (28) mittels einer zweiten Schicht (30) zur Bildung einer zylindrischen Außenkontur mit zur Mittelachse (31) parallelen Fasern gefüllt sind, wobei sich die zweite Schicht (30) in Umfangsrichtung jeweils nur in dem konkaven Bereich (29) erstreckt, wobei auf der zweiten Schicht (30) eine dritte Schicht (32) mit ±20° bis ±45°, insbesondere ±30° zur Axialrichtung der Mittelachse (31) angeordneten Fasern ausgebildet ist und wobei auf der dritten Schicht (32) eine vierte Schicht (33) mit ±80° bis ±90, insbesondere ±88° zur Axialrichtung angeordneten Fasern ausgebildet ist, **dadurch gekennzeichnet, dass** zwischen der zweiten Schicht (30) und der dritten Schicht (32) eine sich um den gesamten Umfang der Welle erstreckende Zwischenschicht (34) aus zur Axialrichtung parallelen Fasern angeordnet ist.

2. Welle nach Anspruch 1, **dadurch gekennzeichnet, dass** die Zwischenschicht (34) durch in Umfangsrichtung der Welle (36) aneinandergrenzende Stabelemente (35) gebildet ist.

3. Welle nach Anspruch 2, **dadurch gekennzeichnet, dass** die Stabelemente (35) aus Fasern gebildet sind, welche durch ein Bindemittel vorfixiert sind.

4. Welle nach einem der Ansprüche 1 bis 3, **dadurch gekennzeichnet, dass** das sinusoide Innenprofil (27) in Umfangsrichtung Wellenlängen (λ) mit Amplituden A aufweist und dass die Amplitude (A) zur Wellenlänge (λ) in einem Verhältnis von 1:8 bis 1:30 steht.

5. Welle nach Anspruch 4, **dadurch gekennzeichnet, dass** das Verhältnis 1:24 beträgt.

6. Welle nach einem der Ansprüche 1 bis 5, **dadurch gekennzeichnet, dass** das sinusoide Innenprofil (27) mit Flankenwinkeln (α) von 10° bis 30°, bevorzugt 15°, ausgebildet ist.

7. Welle nach einem der Ansprüche 1 bis 6, **dadurch gekennzeichnet, dass** die aus ±45° zur Axialrichtung angeordneten Fasern gebildete erste Schicht (28) aus flachen, gespreizten Kohlefaserbändern besteht.

8. Welle nach einem der Ansprüche 2 bis 7, **dadurch gekennzeichnet, dass** die Stabelemente (35) aus mit Bindemitteln fixierten Kohlefasern gebildet sind, welche in der fertiggestellten Welle mit Harz infiltriert und ausgehärtet sind.

9. Welle nach einem der Ansprüche 1 bis 8, **dadurch gekennzeichnet, dass** alle Schichten (28, 30, 31, 32, 33, 34) der Welle (36) mit Harz getränkt und ausgehärtet sind.

10. Welle nach einem der Ansprüche 1 bis 9, **dadurch gekennzeichnet, dass** diese als Endlosstrang gefertigt und abgelängt ist.
